(19) Europäisches Patentamt
European Patent Office
Office européen des brevets

(11) **EP 1 738 503 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
***H04B 10/18*** *(2006.01)*  ***G02B 6/34*** *(2006.01)*

(21) Anmeldenummer: **05715047.6**

(86) Internationale Anmeldenummer:
**PCT/DE2005/000356**

(22) Anmeldetag: **03.03.2005**

(87) Internationale Veröffentlichungsnummer:
**WO 2005/096528 (13.10.2005 Gazette 2005/41)**

(54) **REDUZIERUNG VON SIGNALDEGRADATIONEN BEI OPTISCHEN ÜBERTRAGUNGSSTRECKEN**

REDUCTION OF SIGNAL DEGRADATIONS IN OPTICAL TRANSMISSION LINKS

REDUCTION DE DEGRADATIONS DE SIGNAUX DANS DES LIAISONS DE TRANSMISSION OPTIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.04.2004 DE 102004016198**

(43) Veröffentlichungstag der Anmeldung:
**03.01.2007 Patentblatt 2007/01**

(73) Patentinhaber: **Deutsche Telekom AG
53113 Bonn (DE)**

(72) Erfinder:
• **VORBECK, Sascha
64289 Darmstadt (DE)**
• **SCHNEIDERS, Malte
64289 Darmstadt (DE)**
• **LEPPLA, Ralph
64285 Darmstadt (DE)**

(56) Entgegenhaltungen:
WO-A-03/084100          WO-A-20/04013992
US-A1- 2002 006 257      US-B1- 6 707 957

EP 1 738 503 B1

**Beschreibung**

Die Erfindung betrifft Verfahren, Vorrichtungen bzw. Systeme zur Reduzierung von Signaldegradationen bei optischen Übertragungsstrecken.

Bekanntermaßen kann bei optischen Kommunikations- bzw. Übertagungsstrecken eine Dispersion, also die zeitliche Verbreitung eines optischen Signalpulses im Laufe der Übertragung durch eine optische Faser zu einer Signaldegradation und in Folge eine Signalverzerrung und Bitfehler beim Empfänger führen.

Insbesondere die chromatische Dispersion und die Polarisationsmodendispersion sind hierbei im Wesentlichen auf bestimmte Materialeigenschaften der optischen Faser zurückzuführen. Die chromatische Dispersion basiert im Wesentlichen auf einer Änderung des Brechungsindex des eingesetzten optischen Fasermaterials, z.B. Silikatglas, in Abhängigkeit der Wellenlänge, wodurch Pulse mit schmalerer Halbwertsbreite (breiteres Spektrum) durch die Dispersion stärker verbreitert werden, als Pulse mit einer größeren Halbwertsbreite (schmaleres Spektrum). Die Polarisationsmodendispersion basiert im Wesentlichen auf einer Änderung des Brechungsindex in lediglich einer Dimension unter Ansprechen auf mechanische Unregelmäßigkeiten, z.B. durch Krümmungen, Druck, Zug und/oder Temperatur, der optischen Faser, wodurch eine der orthogonalen Polarisationsmoden schneller als die andere übertragen wird.

Insbesondere bei hochbitratigen optischen Systemen, wie z.B. bei DWDM (Dense Wavelenght Division Multiplex)-Systemen wirken sich somit solche Dispersion besonders negativ auf die Bandbreite, die Länge der Übertragungsstrecke und/oder die Übertragungsgeschwindigkeit aus.

Zur Kompensation der chromatischen Dispersion werden daher schon seit mehreren Jahren dispersionskompensierende Fasern, sogenannte "Dispersion Compensating Fiber" (DCF) oder Fasergitter (Bragg Gitter) eingesetzt, wobei in den optischen Kommunikationssystemen in Regel ausschließlich DCFs eingesetzt werden. Die akkumulierte Dispersion, welche mit den DCFs kompensiert werden kann, hängt von den Parametern und der Länge der DCF ab und ist in der Regel konstant. Es gibt einige Ansätze und Kompensatoren, mit welchen die chromatische Dispersion, nachfolgend auch als CD bezeichnet, auch adaptiv geregelt werden kann. Als Beispiel können hier Allpassfilter und Fasergitter genannt werden.

In Bezug auf die Kompensation von Polarisationsmodendispersion, nachfolgend auch als PMD bezeichnet, beruhen im Wesentlichen alle optischen Kompensatoren auf einer Kaskadierung von Polarisationsstellern, welche die Polarisation des einfallenden Lichtes verändern, und darauffolgenden doppelbrechenden Fasern oder Kristallen. Die Differentielle Gruppenlaufzeitverzögerung (Differential Group Delay, DGD), welche eine physikalische Eigenschaft der Faser und des Kristalls ist und zur PMD und somit zur Signalverzerrung führt, kann dabei fix oder variabel sein. Diese Elemente werden je nach gewünschter Komplexität und Mächtigkeit der Kompensatoren mehrfach kaskadiert und können die Signalverzerrungen, welche bei einer Übertragung über eine Glasfaser entstanden sind, teilweise kompensieren. Neben den optischen Kompensatoren wurden auch schon elektrische Kompensatoren vorgestellt, welche versuchen die Signalqualität nach der optisch-elektrischen Wandlung zu verbessern. Um die Stellgrößen der Kompensatoren zu bestimmen sind die meisten Kompensatoren mit einer Rückkopplungsschleife versehen, welche die Signalqualität aufgrund der Einstellungen des Kompensators beurteilen und optimieren. Zur Zeit befinden sich diese Kompensatoren noch im Versuchsstadium und es ist lediglich ein optischer Kompensator für eine niedrige Datenrate von 10 Gbit/s kommerziell verfügbar.

Um eine Verbesserung der Signalqualität zu erreichen, müssen mit den bisherigen Konzepten somit wenigstens stets zwei Kompensatoren, einer für die CD und einer für die PMLD eingesetzt werden. Diese Vorgehensweise ist sowohl mit höheren Kosten, als auch mit einer höheren Einfügedämpfung gekoppelt, was gerade bei hochbitratigen Systemen zu einer deutlichen Signalverschlechterung durch akkumuliertes Rauschen führt. Bei der Verwendung eines CD und eines PMD Kompensators, also eines zweistufigen Kompensators, mit einer variablen delay line sind ferner eine minimale Anzahl von 4 Freiheitsgeraden zu berücksichtigen und durch eine aufwendige Regelung einzustellen, um eine Signalverbesserung zu erreichen.

Darüber hinaus ist es zur adaptiven Kompensation der CD und PMD bisher notwendig, zusätzliche, insbesondere auch optische Kompensatoren oder Subkomponenten zu beschaffen und in das System einzubauen, was mit einem hohen finanziellem Aufwand verbunden ist.

Ein Verfahren zur Reduzierung einer Signaldegradation bei einer optischen Übertragungsstrecke, gemäß welchem eine chromatische Dispersion und eine Polarisationsmodendispersion eines optischen Signals durch jeweils voneinander unabhängiges Anpassen von Übertragungseigenschaften einer entsprechend eingekoppelten Dispersionskompensationseinrichtung zumindest teilweise kompensiert werden, ist z.B. aus der WO-A-03/084100 bekannt.

Eine Aufgabe der Erfindung ist es einen neuen und gegenüber dem vorstehend aufgezeigten Stand der Technik wesentlich verbesserten Weg aufzuzeigen, mit welchem auf einfache und kostengünstige Weise eine flexible Manipulation zur Verbesserung eines optischen Signals, insbesondere auch im laufenden Betrieb, gewährleistet ist.

Die erfindungsgemäße Lösung der Aufgabe ist auf höchst überraschende Weise bereits durch einen Gegenstand mit den Merkmalen eines der unabhängigen Ansprüche gegeben.

Vorteilhafte und/oder bevorzugte Ausführungsformen und Weiterbildungen der Erfindung sind Gegenstand der jeweils abhängigen Ansprüche.

Erfindungsgemäß ist somit zur Reduzierung einer Signaldegradation bei einer optischen Übertragungsstrecke vorgesehen, eine chromatische Dispersion (CD) und eine Polarisationsmodendispersion (PMD) eines optischen Signals durch Anpassen der Temperatur einer in die Übertragungsstrecke eingekoppelten Dispersionkompensationseinrichtung zumindest teilweise zu kompensieren.

Gegenüber der bisherigen, stets getrennten Kompensation der CD und der PMD hat die Erfindung folglich eine Vielzahl von

Vorteilen. So kann insbesondere die Anzahl der bisher notwendigen Komponenten wesentlich verringert werden, da bereits ein unter Anwendung der Erfindung, im Wesentlichen lediglich auf der Basis einer Temperaturanpassung oder - variation, wirkender Kompensator ausreichend ist, zumindest teilweise sowohl die chromatische Dispersion als auch die Polarisationsmodendispersion zu kompensieren und in Folge die Degradation eines optischen übertragenen Signal zu reduzieren.

Als Dispersionkompensationseinrichtung wird bevorzugt eine Glasfaser, insbesondere eine DCF verwendet.

Um im Wesentlichen stets eine optimale Signalqualität, insbesondere auch bei sich ändernden mechanischen Unregelmäßigkeiten, zu gewährleisten, ist bevorzugt vorgesehen, ein Anpassen der Temperatur der Dispersionkompensationseinrichtung unter Ansprechen auf wenigstens einen eine Signaldegradation repräsentierenden Parameter zu regeln.

Zur Umsetzung eines hierfür geeigneten, lediglich durch die Temperatur geregelten, adaptiven Kompensators, schlägt die Erfindung eine Vorrichtung zur Reduzierung einer Signaldegradation bei einer optischen Übertragungsstrecke vor, welche eine in die Übertragungsstrecke einkoppelbare Dispersionkompensationseinrichtung umfasst, welche mit einer Einrichtung zum Verändern der Temperatur der Dispersionkompensationseinrichtung verbunden ist, sowie einen mit der Temparaturveränderungseinrichtung zur Temperaturregelung der Dispersionkompensationseinrichtung verbundenen Regler, der zur zumindest teilweisen Kompensation einer CD und einer Polarisationsmodendispersion eines optischen Signals in Abhängigkeit wenigstens eines eine Signaldegradation repräsentierenden Parameters ausgebildet ist.

Ein Wesentlicher Vorteil der erfindungsgemäßen Vorrichtung besteht somit darin, dass mit Hilfe von adaptiv geregelten Temperaturänderungen in der Dispersionkompensationseinrichtung, also durch Temperaturänderungen einer Subkomponente des Übertragungssystems sowohl eine Kompensation einer CD bewirkt und insbesondere auch den physikalischen Effekten der PMD effektiv entgegengewirkt werden kann.

Dieser wenigstens eine, eine Signaldegradation repräsentierende Parameter wird in zweckmäßiger Weise unmittelbar auf Empfängerseite erfasst und als ein zu optimierender Istwert zur Regelung der Temperaturanpassung verwendet. Ein, wenigstens eine, einer optischen Übertragungsstrecke zugeordnete Vorrichtung nach der Erfindung umfassendes optisches Übertragungssystem weist folglich bevorzugt ferner wenigstens eine auf der Empfangsseite der Übertragungsstrecke angeordnete und mit dem Regler in Verbindung stehende Überwachungseinrichtung zur Erfassung des wenigstens einen eine Signaldegradation repräsentierenden Parameters und Rückkopplung dieses als Feedbacksignal an den Regler auf.

Zur kostengünstigen Nutzung bereits vorhandener Komponenten ist hierbei in praktischer Weiterbildung vorgesehen, die Überwachungseinrichtung und den Regler über einen der Übertragungsstrecke zugeordneten Überwachungskanal miteinander zu verbinden.

Insbesondere in Hinblick auf die Kompensation der PMD hat es sich als Vorteilhaft erwiesen, die temperaturbasierte Kompensation an einer Stelle der optischen Übertragungsstrecke durchzuführen, an welcher sich die vorhergehende mittlere differentielle Gruppenlaufzeitdifferenz und die nachfolgende mittlere differentielle Gruppenlaufzeitdifferenz einander im Wesentlichen entsprechen. Unabhängig von der Länge der optischen Übertragungsfaser kann folglich mit einer in bevorzugter Weiterbildung auf der im Wesentlichen halben Übertragungsstrecke zwischen Sender und Empfänger eingekoppelten Dispersionkompensationseinrichtung die optimale Wirkung, ähnlich einem temperaturabhängigen Polarisationssteller, sichergestellt werden.

Die Erfindung ist somit im Wesentlichen unabhängig vom Modulationsformat und der Datenrate einsetzbar und ist ferner auf Subkomponenten aufsetzbar, welche bereits im System vorhanden sind. Lediglich die Heizkomponenten müssen nachgerüstet werden, für welche jedoch, da es sich hier nicht um empfindliche optische Bauteile handelt, der finanzielle Aufwand gering ist. Je nachdem, wie die Dispersionskompensation in einem bestehenden System bereits realisiert ist, kann der Einbau des Kompensators nach der Erfindung darüber hinaus sogar im laufenden Betrieb erfolgen.

Ferner besitzt eine erfindungsgemäße, die CD und PMD nach entsprechender Temperaturanpassung im Wesentlichen simultan kompensierende Vorrichtung nur ein Stellglied, dessen Definitionsbereich, je nach Ausführungsform unter Zugrundelegung bestimmter Berechnungen und funktionaler Abhängigkeiten zudem stark reduziert werden kann.

Als bevorzugte Weiterbildungen schlägt die Erfindung hierzu ferner die Ausbildung der erfindungsgemäßen Vorrichtung insbesondere derart vor, dass zunächst ein Temperaturbereich für die Dispersionkompensationseinrichtung festgelegt wird, bei welchem die CD innerhalb vorgebbarer Grenzen kompensiert wird und nachfolgend die Minimierung eines die Signaldegradation in Folge von PMD repräsentierenden Parameters durch Verändern der Temperatur innerhalb dieses Temperaturbereichs geregelt wird.

Bei einer ersten bevorzugten Ausführungsform wird der Temperaturbereich voreingestellt und für die Signaldegradation in Folge von PMD ein Maß für die empfangsseitige Signalqualität verwendet.

Bei einer zweiten bevorzugten Ausführungsform werden zwei, jeweils in direktem Zusammenhang mit den physikalischen Effekten einer CD bzw. einer PMD stehende Parameter empfangsseitig erfasst und nacheinander optimiert.

Bei einer dritten bevorzugten Ausführungsform wird der Temperaturbereich in Abhängigkeit eines in direktem Zusammenhang mit den physikalischen Effekten einer CD stehenden, empfangsseitig erfassten Parameters und vorgegebenen Randbedingungen berechnet und für die Signaldegradation in Folge von PMD ein Maß für die empfangsseitige Signalqualität verwendet.

Zweckmäßige Randbedingungen sind insbesondere eine erlaubte Über- und Unterkompensation, die Signaldatenrate und/oder spezifische Parameter der Dispersion kompensationseinrichtung.

Insbesondere in Abhängigkeit eines jeweils vorliegenden optischen Übertragungssystems und/oder, z.B. applikationsspezifisch vorgegebener, zu regelnder Parameter kann somit auf eine Vielzahl unterschiedlicher Meßgrößen für die Bereitstellung eines Feedbacksignals zurückgegriffen werden.

Zum Messen der Signalqualität sind Überwachungseinrichtungen bevorzugt zum Erfassen einer BER, der Anzahl der korrigierten Symbolfehler einer Fehlerschutzkodierung, eines Q-Faktors und/oder eines Augendiagramms ausgebildet. Weitere bevorzugte Meßgrößen werden durch Überwachungseinrichtungen bereitgestellt, die zum Erfassen einer akkumulierte Dispersion, eines Polarisationsgrades und/oder eines Leistungsdichtespektrums ausgebildet sind.

Weiter Vorteile und Merkmale der Erfindung werden aus der nachfolgenden beispielhaften Beschreibung bevorzugter Ausführungsformen unter Bezugnahme auf die beigefügten Zeichnungen ersichtlich. In den Zeichnungen zeigen:

Fig. 1    in grafischer Darstellung die Messung der DGD zu verschiedenen Tageszeiten und somit Umgebungstemperaturen,

Fig. 2    die Signaldegradation durch CD und PMD in Abhängigkeit der Temperatur einer Dispersionskompensationsfaser,

Fig. 3    eine erste bevorzugte Ausführungsform der Erfindung mit lediglich einem Rückkopplungssignal,

Fig. 4    eine zweite bevorzugte Ausführungsform der Erfindung mit einem Rückkoppelsignal für die Signalverzerrungen durch PMD und einem für die Signalverzerrungen durch CD, und

Fig. 5    eine dritte bevorzugte Ausführungsform der Erfindung mit Berechnung von $\Delta T_{CD}$ und Regelung auf die minimale Signaldegradation im Bereich $\Delta T_{PMD}$.

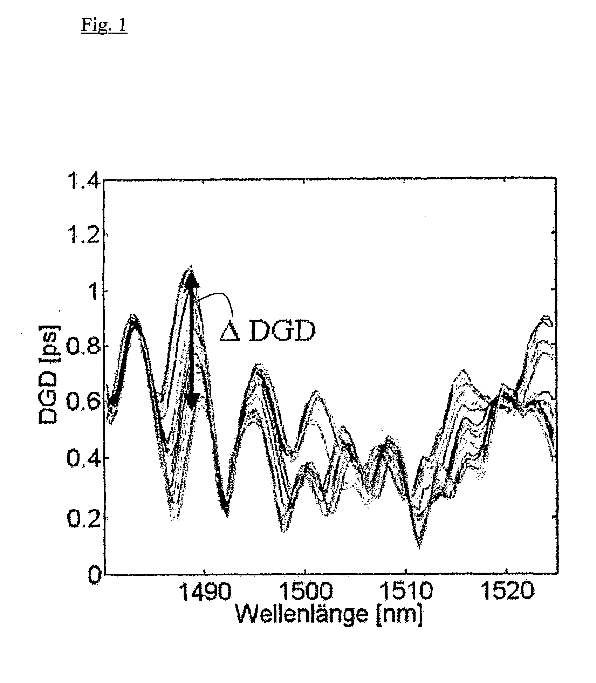

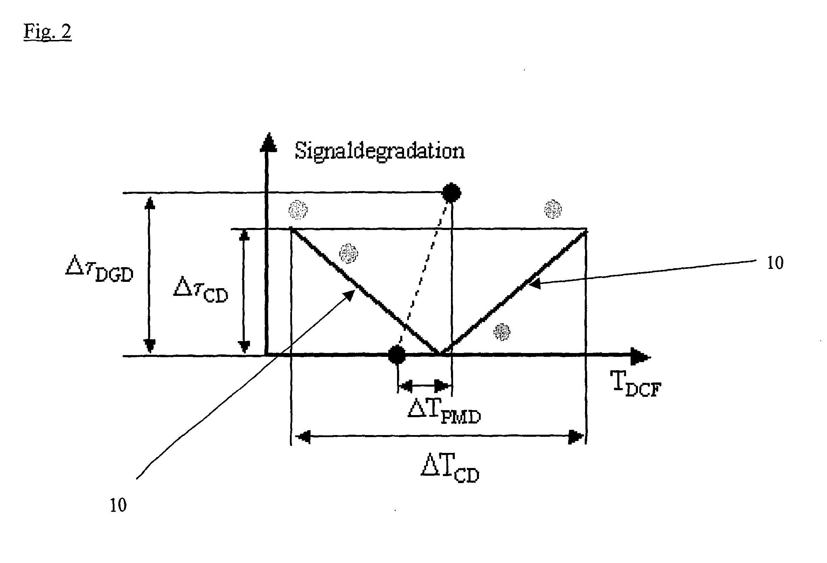

Nachfolgend werden drei bevorzugte Ausführungsformen der Erfindung detaillierter, jedoch lediglich beispielhaft beschrieben, wobei zunächst ausführlich auf die Wirkungsweise der Erfindung unter Bezugnahme auf die Fig. 1 und 2 eingegangen wird.

Die Wirkungsweise der Erfindung beruht wesentlich auf der Erkenntnis, dass sowohl die CD als auch die PMD einer Faser über die Temperatur manipuliert werden können. Dabei hat sich gezeigt, dass die PMD wesentlich sensibler auf eine Temperaturänderung reagiert als die Dispersion.

Für die grafische Darstellung gemäß Fig. 1 wurde die Differentielle Gruppenlaufzeitverzögerung DGD zu verschiedenen Tageszeiten und somit Umgebungstemperaturen gemessen. Zu erkennen ist insbesondere, dass eine starke Abhängigkeit der DGD von der Temperatur besteht. Beispielhaft ist bei einer Wellenlänge von ca. 1490nm eine solche temperaturabhängige Abhängigkeit der DGD durch den in Fig. 1 mit $\Delta$DGD belegten Doppelpfeil verdeutlicht.

Des Weiteren hat sich gezeigt, dass eine temperaturbasierte Änderung der CD ein streng monotones Verhalten aufweist, was bei der PMD nicht gegeben ist. Bei konstanter Temperatur ist sowohl die CD, als auch die PMD der Faser und folglich auch die Signalqualität nahezu konstant, insbesondere unter der Voraussetzung, dass auch weitere auf die optische Übertragungsfaser einwirkende, z.B. mechanische einwirkende, Randbedingungen im Wesentlichen konstant sind. Da ferner in Abhängigkeit der Datenrate die Signalqualität bei einer gewissen Unterkompensation (positive akkumulierte CD) oder einer gewissen Überkompensation (negative akkumulierte CD) noch hinreichend gut ist, muss in einem optischen Übertragungssystem die CD innerhalb eines Toleranzbereichs nicht exakt kompensiert werden.

Bei Fig. 2 ist der Zusammenhang der Signaldegradation durch CD und PMD dargestellt. Die Signaldegradation aufgrund von CD ist ein deterministischer Prozess und verläuft entlang der beiden mit 10 bezeichneten Linien. Bei einer Abweichung vom optimalen Dispersionswert aufgrund einer Änderung von $T_{DCF}$, der Temperatur der Dispersionkompensationseinrichtung, insbesondere einer Dispersionskompensationsfaser DCF, steigt die Signaldegradation durch CD monoton an. Ein temperaturabhängiger Toleranzbereich $\Delta T_{CD}$ für die CD mit einer hinreichend kleinen Signaldegradation ist bei Vernachlässigung der PMD noch sehr groß. Wenn zusätzlich zur CD auch die PMD berücksichtigt wird, überlagert sich dem monotonen Verlauf der Signaldegradation eine statistische Signaldegradation aufgrund der PMD. Wie bereits diskutiert, führen hierbei bereits kleine Temperaturschwankungen zu großen Änderungen der Signaldegradation, bei Fig. 1 durch die beiden über die gestrichelte Linie verbundenen Messpunkte dargestellt. Wie bei Fig. 2 ferner dargestellt, kann für die PMD ein schmaler temperaturabhängiger Toleranzbereich $\Delta T_{PMD}$ mit einer minimalen Signaldegradation im Toleranzbereich $\Delta T_{CD}$ der CD gefunden werden. Auf diese Weise ist es möglich sowohl die Degradation aufgrund der CD, als auch die Degradation aufgrund von PMD mit lediglich der Regelgröße $T_{DCF}$ zu minimieren.

Damit eine schnelle, exakte und homogene Temperaturänderung der DCF möglich ist, wird die DCF somit bevorzugt in einer Temperaturkammer oder mit einer anderen geeigneten Temperaturveränderungseinrichtung geheizt oder gekühlt. Basierend auf Datenblättern von Faserherstellern, werden die Glasfasern schon bei den Qualitätskontrollen einer minimalen Temperatur von -60 °C und einer maximalen Temperatur von 85 °C ausgesetzt, so dass ausgeschlossen werden kann, dass die DCFs in den Temperaturkammern zerstört werden.

Im Vergleich zu der PMD der Übertragungsfaser weist die DCF jedoch aufgrund der geringeren Länge wesentlich geringere PMD - Werte auf. Der DCF ist es somit in der Regel nicht möglich die Übertragungsfunktion der Übertragungsfaser exakt, invertiert nachzubilden. Die DCF wirkt folglich vielmehr wie ein temperaturabhängiger Polarisationssteller, welcher das Signal derartig in die nächste Übertragungsfaser einkoppelt, dass die Signalverzerrungen durch PMD minimiert werden. Ein Kompensator gemäß der Erfindung erreicht folglich die besten Ergebnisse, wenn aufgrund des Systemaufbaus die Verzerrungen durch PMD vor dem Kompensator durch die Faserabschnitte nach dem Kompensator wieder entzerrt werden können. Der erfindungsgemäße Kompensator sollte folglich an der Stelle im Übertragungssystem eingebaut werden, an welcher die mittlere differentielle Gruppenlaufzeitdifferenz vor dem Kompensator der mittleren differentiellen Gruppenlaufzeitdifferenz nach dem Kompensator entspricht. Die erforderlichen Messdaten für die Temperaturregelung müssen somit über die halbe Übertragungsstrecke bis zum Regler transportiert werden. Dieser Transfer kann zweckmäßig über den Überwachungskanal des Übertragungssystems (Supervisory Channel) vorgenommen werden, welcher zur Überwachung und Steuerung der Netzelemente herkömmlicher Weise bereits in jedem Übertragungssystem realisiert ist.

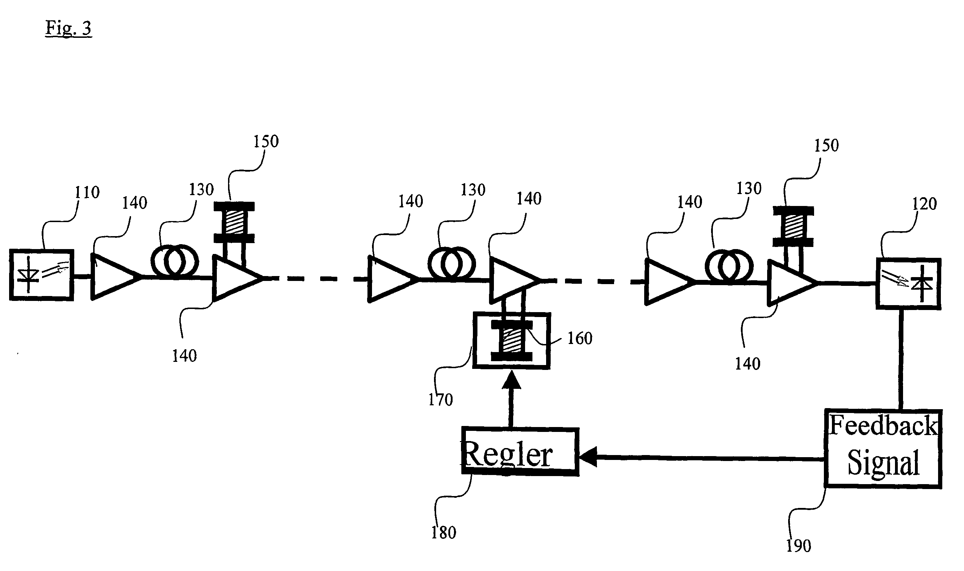

Für die gleichzeitige adaptive temperaturbasierte Kompensation der CD und der PMD werden nachfolgend unter Bezugnahme der Figuren 3 bis 5 drei bevorzugte Realisierungen unterschiedlicher Komplexität beschrieben. Bei den Fig. 3 bis 5 sind schematisch jeweils eine optische Übertragungsstrecke zwischen einem Sender 110 und einem Empfänger 120 dargestellt. Die Übertragungsstrecke umfasst eine Vielzahl von optischen Übertragungsfasern 130 bestimmter Länge, die über Verstärker 140 zur Signalverstärkung miteinander verbunden sind. Ferner sind mehrere dispersionskompensierende Fasern 150, 160 über Verstärker 140 in die Übertragungsstrecke eingekoppelt.

Die dispersionskompensierenden Fasern 150 sind hinsichtlich ihren Eigenschaften starr und kompensieren in der Regel bereits einen großen Anteil von chromatischer Dispersion. Die mit der Bezugsziffer 160 gekennzeichnete dispersionskompensierende Faser DCF ist hinsichtlich deren Temperatur veränderbar und ist Teil des erfindungsgemäßen adaptiven Kompensators, der somit in den dargestellten Beispielen einer weiteren Feinabstimmung bei der Kompensation der chromatischen Dispersion dient.

Zur Änderung der Temperatur ist die dispersionskompensierende Faser 160 in einer Temperaturkammer 170 angeordnet, deren Temperaturregelung mittels eines Reglers 180 erfolgt. Eine empfangsseitig mit der Übertragungsstrecke verbundene Überwachungseinrichtung 190 misst wenigstens einen eine Signaldegradation mittelbar oder unmittelbar repräsentierenden Parameter und führt diesen als Feedbacksignal dem Regler wieder zu.

Im einzelnen wird bei der Realisierung gemäß Fig. 3 z.B. die Signalqualität am Ende der Übertragungsstrecke beim Empfänger 120 gemessen an die Regeleinheit als Feedbacksignal übermittelt. Die Signalqualität kann dabei z.B. in Form einer Bitfehlerrate (BER), der Anzahl der korrigierten Symbolfehler einer Fehlerschutzkodierung (Forward Error Correction FEC), eines Q-Faktors oder eines Augendiagramms festgestellt werden. Als Eingabeparameter des Reglers ist bei dieser Realisierung somit lediglich ein Parameter bereits ausreichend, wobei die adaptive Temperatureinstellung in diesem Fall bevorzugt wie folgt durchgeführt wird.

Der Temperaturbereich der DCF 160 wird bei der Inbetriebnahme durchfahren, wobei der Bereich der optimalen CD-Kompensation $\Delta T_{CD}$ als breites Maximum der Signalqualität bestimmt wird. Innerhalb dieses Bereiches ist die CD hinreichend genau kompensiert und Fluktuationen innerhalb des Bereiches können folglich auf den Einfluss der PMD zurückgeführt werden. Der Regler 180 muss somit lediglich in diesem kleinen Bereich den Arbeitspunkt mit der minimalen Signaldegradation einstellen.

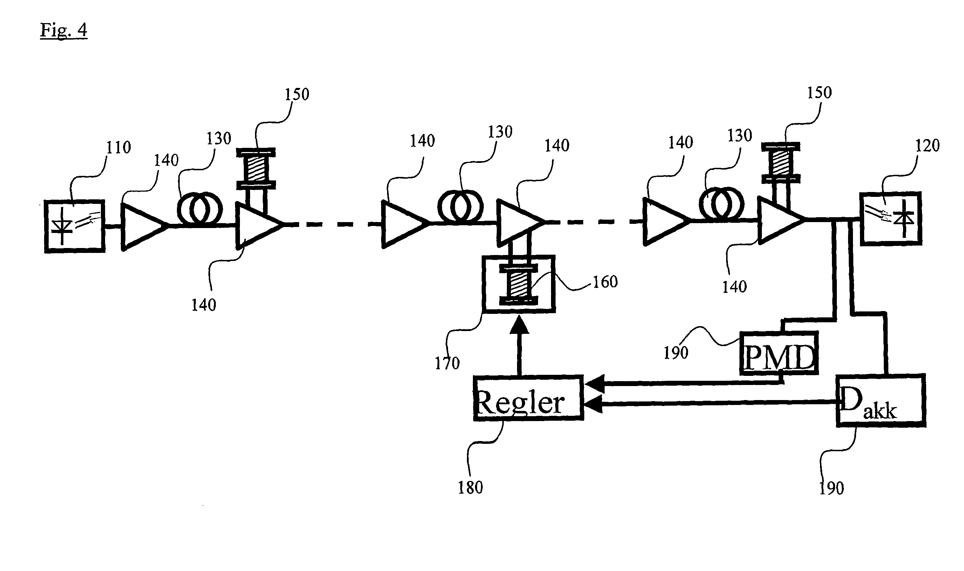

Die zweite Realisierung gemäß Fig. 4 ist im Vergleich zur ersten komplexer. Dem Regler 180 werden bei dieser Realisierung zwei Eingabeparameter zugeführt, welche direkt mit den beiden physikalischen Effekten CD und PMD in Zusammenhang gebracht werden können und folglich unmittelbar vorgeben, welcher Effekt noch weiter kompensiert werden muss.

Für das Überwachen der CD bietet sich hier die akkumulierte Dispersion $D_{akk}$ am Ende der Faserstrecke an. In einem ersten Kompensationsschritt wird der Kompensator zunächst durch Variation der Temperatur in den Arbeitsbereich $\Delta T_{CD}$ gebracht, so dass die restliche akkumulierte Dispersion anschließend innerhalb des Toleranzbereichs des Übertragungssystems liegt.

Für das Überwachen der PMD kann zum Beispiel der Polarisationsgrad (Degree of Polarization DOP) oder das Leistungsdichtespektrum des Signals (Spectral hole burning) als Eingangsparameter des Reglers 180 benutzt werden. Völlig polarisiertes Licht hat einen DOP von 1 was einem, durch PMD erster Ordnung, nicht verzerrten Signal entspricht. Beim Spectral hole burning kann anhand des elektrischen Spektrums die Signalverzerrung aufgrund von PMD minimiert werden. Innerhalb des Temperaturbereichs $\Delta T_{CD}$ mit geringen Signalverzerrungen durch CD kann die Signalverzerrung durch PMD nun auf ein Minimum im Bereich $\Delta T_{PMD}$ geregelt werden.

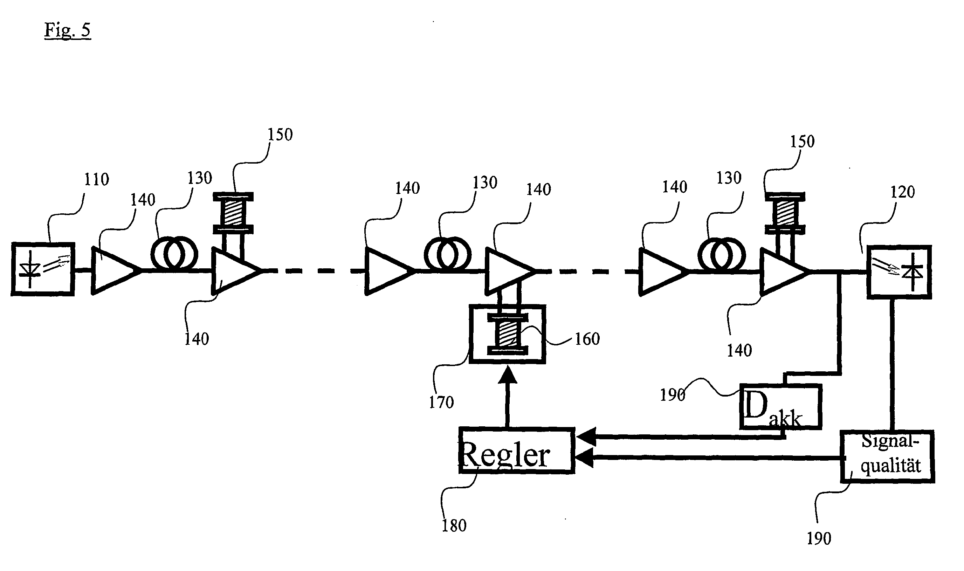

Bei der dritten Realisierung gemäß Fig. 5 wird in einem ersten Schritt die aktuelle akkumulierte Dispersion $D_{akk}$ durch einen Dispersionsmonitor 190 gemessen. Anschließend wird in Abhängigkeit der erlaubten Über- und Unterkompensation, der Datenrate des Signals und der Faserparameter der DCF 160 der Temperaturbereich $\Delta T_{CD}$ vom Regler 180 berechnet, in welchem sich die DCF 160 befinden sollte, um bezogen auf die Dispersion eine hinreichend gute Signalqualität zu erreichen. Die Änderung des Dispersionsparameters (D) mit der Temperatur (T) kann bevorzugt mit der aus der Sellmeier Gleichung 3. Ordnung abgeleiteten folgenden Formel

$$\frac{dD}{dT} = \frac{1}{4}\left(\lambda - \frac{\lambda_0^4}{\lambda^3}\right)\frac{dS_0}{dT} - \frac{S_0\lambda_0^3}{\lambda^3}\frac{d\lambda_0}{dT}$$

berechnet werden, wobei $\lambda$ die Wellenlänge, $\lambda_0$ die Wellenlänge im Dispersionsnulldurchgang und $S_0$ die Steigung im Dispersionsnulldurchgang repräsentiert.

Durch Umstellen der Gleichung nach dT, Einsetzen der erlaubten Grenzen für die Über- und Unterkompensation und der Faserparameter kann $\Delta T_{CD}$ berechnet werden. Anschließend steuert der Regler 180 die Temperaturkammer 170 derart, dass der erlaubte Temperaturbereich $\Delta T_{CD}$ von der minimalen bis zur maximalen Temperatur durchfahren wird. Die DGD und der Parameter der Signalqualität Durchlaufen beim Durchfahren des Temperaturbereich mehrere Maxima und Minima. Während dieses Prozesses wird die Signalqualität gemessen und vom Regler 180 aufgenommen. Anhand der Kurven der Signalqualität über der Temperatur regelt der Regler 180 die Temperatur der DCF 160 auf den optimalen Wert mit der geringsten Signaldegradation im Bereich $\Delta T_{PMD}$. In diesem Zustand sind sowohl die CD als auch die PMD optimal kompensiert und die Signalqualität wird maximiert. Für diese Realisierung ergeben sich mit dem Wert der akkumulierten Dispersion und der Signalqualität zwei Eingabeparameter für den Regler.

**Patentansprüche**

1. Verfahren zur Reduzierung einer Signaldegradation bei einer optischen Übertragungsstrecke, **dadurch gekennzeichnet, dass** eine chromatische Dispersion und eine Polarisationsmodendispersion eines optischen Signals gleichzeitig lediglich durch Anpassen der Temperatur nur einer in die Übertragungsstrecke eingekoppelten Dispersionkompensationseinrichtung zumindest teilweise kompensiert werden.

2. Verfahren nach Anspruch 1, ferner **dadurch gekennzeichnet, dass** das Anpassen der Temperatur der Dispersionkompensationseinrichtung unter Ansprechen auf wenigstens einen eine Signaldegradation repräsentierenden Parameter geregelt wird.

3. Verfahren nach vorstehendem Anspruch, wobei der wenigstens eine Parameter auf Empfängerseite erfasst wird und als ein zu optimierender Istwert zur Regelung der Temperaturanpassung verwendet wird.

4. Verfahren nach einem der vorstehenden Ansprüche, ferner **dadurch gekennzeichnet, dass** die temperaturbasierte Kompensation an einer Stelle der optischen Übertragungsstrecke durchgeführt wird, an welcher sich die vorhergehende mittlere differentielle Gruppenlaufzeitdifferenz und die nachfolgende mittlere differentielle Gruppenlaufzeitdifferenz einander im Wesentlichen entsprechen.

5. Verfahren nach einem der vorstehenden Ansprüche, ferner **dadurch gekennzeichnet, dass** ein Temperaturbereich für die Dispersionkompensationseinrichtung eingestellt wird, bei welchem die chromatische Dispersion innerhalb vorgebbarer Grenzen kompensiert wird und ein Minimum eines eine Signaldegradation in Folge von Polarisationsmodendispersion repräsentierenden Parameters durch Verändern der Temperatur innerhalb dieses Temperaturbereichs eingestellt wird.

6. Verfahren nach vorstehendem Anspruch, ferner **dadurch gekennzeichnet, dass** der Temperaturbereich voreingestellt wird und für die Signaldegradation in Folge von Polarisationsmodendispersion ein Maß für die empfangsseitige Signalqualität verwendet wird.

7. Verfahren nach Anspruch 5, ferner **dadurch gekennzeichnet, dass** zwei, jeweils in direktem Zusammenhang mit den physikalischen Effekten einer chromatischen Dispersion bzw. einer Polarisationsmodendispersion stehende Parameter empfangsseitig erfasst werden und nacheinander optimiert werden.

8. Verfahren nach Anspruch 5, ferner **dadurch gekennzeichnet, dass** der Temperaturbereich in Abhängigkeit eines in direktem Zusammenhang mit den physikalischen Effekten einer chromatischen Dispersion stehenden, empfangsseitig erfassten Parameters und vorgegebenen Randbedingungen berechnet wird und für die Signaldegradation in Folge von Polarisationsmodendispersion ein Maß für die empfangsseitige Signalqualität verwendet wird.

9. Verfahren nach vorstehendem Anspruch, ferner **dadurch gekennzeichnet, dass** als Randbedingungen eine erlaubte Über- und Unterkompensation, die Signaldatenrate und/oder spezifische Parameter der Dispersionkompensationseinrichtung vorgegeben werden.

10. Verfahren nach einem der vorstehenden Ansprüche, wobei als Dispersionkompensationseinrichtung eine Glasfaser verwendet wird.

11. Vorrichtung zur Reduzierung einer Signaldegradation bei einer optischen Übertragungsstrecke, umfassend eine in die Übertragungsstrecke einkoppelbare Dispersionkompensationseinrichtung (160), welche mit einer Einrichtung (170) zum Verändern der Temperatur der Dispersionkompensationseinrichtung verbunden ist sowie einen mit der Temparaturveränderungseinrichtung verbundenen Regler (180), der zur gleichzeitigen zumindest teilweisen Kompensation einer chromatischen Dispersion und einer Polarisationsmodendispersion eines optischen Signals in Abhängigkeit wenigstens eines eine Signaldegradation repräsentierenden Parameters über die Temparaturveränderungseinrichtung lediglich eine Temperaturregelung dieser Dispersionkompensationseinrichtung durchführt.

12. Vorrichtung nach vorstehendem Anspruch, wobei die Vorrichtung die Einstellung eines Temperaturbereichs für die Dispersionkompensationseinrichtung bewirkt, bei welchem die chromatische Dispersion innerhalb vorgebbarer Grenzen kompensierbar ist und innerhalb dieses Temperaturbereichs eine Veränderung der Temperatur zum Auffinden eines Minimums eines eine Signaldegradation in Folge von Polarisationsmodendispersion repräsentierenden Parameters bewirkt.

13. Optisches Übertragungssystem, umfassend wenigstens eine optische Übertragungsstrecke mit einer Vorrichtung nach einem der Ansprüche 11 und 12.

14. Optisches Übertragungssystem nach vorstehendem Anspruch, **dadurch gekennzeichnet, dass** die Dispersionkompensationseinrichtung auf der im Wesentlichen halben Übertragungsstrecke des Systems eingekoppelt ist.

15. Optisches Übertragungssystem nach einem der Ansprüche 11 bis 14, ferner **gekennzeichnet durch** wenigstens eine auf der Empfangsseite der Übertragungsstrecke angeordnete und mit dem Regler in Verbindung stehende Überwachungseinrichtung (190) zur Erfassung des wenigstens einen eine Signaldegradation repräsentierenden Parameters und Rückkopplung dieses als Feedbacksignal an den Regler.

16. Optisches Übertragungssystem nach vorstehendem Anspruch, wobei die Überwachungseinrichtung und der Regler über einen der Übertragungsstrecke zugeordneten Überwachungskanal miteinander in Verbindung stehen.

17. Optisches Übertragungssystem nach einem der beiden vorstehenden Ansprüche, **gekennzeichnet durch** eine zur Erfassung einer BER, der Anzahl der korrigierten Symbolfehler einer Fehlerschutzkodierung, eines Q-Faktors und/oder eines Augendiagramms ausgebildete Überwachungseinrichtung.

18. Optisches Übertragungssystem nach einem der drei vorstehenden Ansprüche, **gekennzeichnet durch** eine zur Erfassung der akkumulierten Dispersion ausgebildete Überwachungseinrichtung.

19. Optisches Übertragungssystem nach einem der vier vorstehenden Ansprüche, **gekennzeichnet durch** eine zur Erfassung des Polarisationsgrades oder des Leistungsdichtespektrums ausgebildete Überwachungseinrichtung.

**Claims**

1. Method for reducing signal degradation in an optical transmission path,
   **characterized in that**
   a chromatic dispersion and a polarization mode dispersion of an optical signal are simultaneously compensated, at least partially, merely by matching of the temperature of only one dispersion compensation device coupled into the transmission path.

2. Method according to claim 1, further **characterized in that**
   the matching of the temperature of the dispersion compensation device is regulated in response to at least one parameter representing a signal degradation.

3. Method according to the preceding claim, wherein the at least one parameter is measured on the receiver side and is used as an actual value to be optimized for regulating the temperature matching.

4. Method according to any one of the preceding claims, further **characterized in that**
   the temperature-based compensation is carried out at a location in the optical transmission path where the preceding mean differential group delay difference and the subsequent mean differential group delay difference essentially correspond to one another.

5. Method according to any one of the preceding claims, further **characterized in that**
   a temperature range is set for the dispersion compensation device at which the chromatic dispersion is compensated within predefinable limits and a minimum of one parameter representing a signal degradation as a result of polarization mode dispersion is set by changing the temperature within this temperature range.

6. Method according to the preceding claim, further **characterized in that** the temperature range is preset and is used as a measure for the signal quality on the receive side for the signal degradation resulting from polarization mode dispersion.

7. Method according to claim 5, further **characterized in that**
   two parameters, each of which stands in direct relationship to the physical effects of a chromatic dispersion or of a polarization mode dispersion, are measured on the receive side and are optimized sequentially.

8. Method according to claim 5, further **characterized in that**
   the temperature range is calculated as a function of a parameter measured on the receive side that stands in direct relationship to the physical effects of a chromatic dispersion and of predetermined boundary conditions, and is used as a measure for the signal quality on the receive side for the signal degradation resulting from polarization mode dispersion.

9. Method according to the preceding claim, further **characterized in that**
   a permissible overcompensation and undercompensation, the signal data rate, and/or specific parameters of the dispersion compensation device are predetermined as boundary conditions.

10. Method according to any one of the preceding claims, wherein a glass fiber is used as the dispersion compensation device.

11. Apparatus for reducing signal degradation in an optical transmission path, comprising a dispersion compensation device (160) that can be coupled into the transmission path, that is connected to a device (170) for changing the temperature of the dispersion compensation device and also comprising a controller (180) connected to the temperature changing device, which controller, for the purpose of simultaneously compensating, at least partially, a chromatic dispersion and a polarization mode dispersion of an optical signal as a function of at least one parameter representing a signal degradation, carries out only one temperature regulation of this dispersion compensation device through the temperature changing device.

12. Apparatus according to the preceding claim, wherein the apparatus accomplishes setting of a temperature range for the dispersion compensation device, within which range the chromatic dispersion can be compensated within predefinable limits, and the apparatus carries out, within this temperature range, a change in the temperature to discover a minimum of one parameter representing a signal degradation as a result of polarization mode dispersion.

13. Optical transmission system, comprising at least one optical transmission path with an apparatus according to any one of claims 11 and 12.

14. Optical transmission system according to the preceding claim, **characterized in that** the dispersion compensation device is coupled into essentially half the transmission path of the system.

15. Optical transmission system according to any one of claims 11 through 14, further **characterized by** at least one monitoring device (190) that is arranged on the receive side of the transmission path and stands in connection with the controller for measuring the at least one parameter representing a signal degradation and for feeding back the same to the controller in the form of a feedback signal.

16. Optical transmission system according to the preceding claim, wherein the monitoring device and the controller stand in connection with one another through a monitoring channel associated with the transmission path.

17. Optical transmission system according to any one of the preceding two claims, **characterized by** a monitoring device designed for measuring a BER, the number of corrected symbol errors of an error protection coding, a Q factor, and/or an eye diagram.

18. Optical transmission system according to any one of the preceding three claims, **characterized by** a monitoring device designed for measuring the accumulated dispersion.

19. Optical transmission system according to any one of the preceding four claims, **characterized by** a monitoring device designed for measuring the degree of polarization or the power density spectrum.


**Revendications**

1. Procédé de réduction d'une dégradation de signal dans une liaison de transmission optique, **caractérisé en ce qu'**une dispersion chromatique et une dispersion des modes de polarisation d'un signal optique sont compensées simultanément au moins partiellement par l'adaptation de la température seulement d'un module de compensation de dispersion couplé dans la liaison de transmission.

2. Procédé selon la revendication 1, également **caractérisé en ce que** l'adaptation de la température du module de compensation de dispersion est réglée en réponse à au moins un paramètre représentant une dégradation de signal.

3. Procédé selon la revendication précédente, dans lequel au moins un paramètre est détecté côté récepteur et utilisé comme valeur réelle à optimiser pour le réglage de l'adaptation de température.

4. Procédé selon l'une des revendications précédentes, également **caractérisé en ce que** la compensation basée sur la température est réalisée à un endroit de la liaison de transmission optique où le retard de groupe différentiel moyen précédent et le retard de groupe différentiel moyen suivant se correspondent essentiellement.

5. Procédé selon l'une des revendications précédentes, également **caractérisé en ce qu'**une plage de température est réglée pour le module de compensation de dispersion dans laquelle la dispersion chromatique est compensée à l'intérieur de limites prédéfinissables et **en ce qu'**un minimum d'un paramètre représentant une dégradation de signal due à une dispersion des modes de polarisation est réglée par modification de la température à l'intérieur de ladite plage de température.

6. Procédé selon la revendication précédente, également **caractérisé en ce que** la plage de température est préréglée et **en ce qu'**une mesure de la qualité de signal côté récepteur est utilisée pour la dégradation de signal due à une dispersion des modes de polarisation.

7. Procédé selon la revendication 5, également **caractérisé en ce que** deux paramètres directement liés chacun aux effets physiques d'une dispersion chromatique ou d'une dispersion des modes de polarisation sont détectés côté récepteur et optimisés l'un après l'autre.

8. Procédé selon la revendication 5, également **caractérisé en ce que** la plage de température est calculée en fonction d'un paramètre directement lié aux effets physiques d'une dispersion chromatique, détecté côté récepteur, et de contraintes prédéfinies et **en ce qu'**une mesure de la qualité de signal côté récepteur est utilisée pour la dégradation de signal due à la dispersion des modes de polarisation.

9. Procédé selon la revendication précédente, également **caractérisé en ce que** les contraintes prédéfinies sont une surcompensation et une sous-compensation autorisées, le débit de signal et/ou des paramètres spécifiques du module de compensation de dispersion.

10. Procédé selon l'une des revendications précédentes, dans lequel le module de compensation de dispersion utilisé est une fibre de verre.

11. Dispositif pour la réduction d'une dégradation de signal dans une liaison de transmission optique comprenant un module de compensation de dispersion (160) apte à être couplé dans la liaison de transmission et relié à un module (170) de modification de la température du module de compensation de dispersion ainsi qu'un régulateur (180) relié au module de modification de température qui, aux fins de la compensation simultanée au moins partielle d'une dispersion chromatique et d'une dispersion des modes de polarisation d'un signal optique en fonction d'au moins un paramètre représentant une dégradation de signal réalise une régulation de température seulement de ce module de compensation de dispersion par l'intermédiaire du module de modification de température.

12. Dispositif selon la revendication précédente, le dispositif provoquant le réglage d'une plage de température pour le module de compensation de dispersion, dans laquelle la dispersion chromatique est compensable à l'intérieur de limites prédéfinissables et provoque, à l'intérieur de cette plage de température, une modification de la température pour rechercher un minimum d'un paramètre représentant une dégradation de signal due à une dispersion des modes de polarisation.

13. Système de transmission optique comprenant au moins une liaison de transmission optique dotée d'un dispositif selon l'une des revendications 11 et 12.

14. Système de transmission optique selon la revendication précédente, **caractérisé en ce que** le module de compensation de dispersion est couplé essentiellement à mi-chemin dans la liaison de transmission du système.

15. Système de transmission optique selon l'une des revendications 11 à 14, également **caractérisé par** au moins un module de surveillance (190) disposé côté récepteur de la liaison de transmission et relié au régulateur pour la détection du au moins un paramètre représentant une dégradation de signal et la rétroaction de celui-ci comme signal de rétroaction vers le régulateur.

16. Système de transmission optique selon la revendication précédente, le module de surveillance et le régulateur étant reliés ensemble par un canal de surveillance affecté à la liaison de transmission.

17. Système de transmission optique selon l'une des deux revendications précédentes, **caractérisé par** un module de surveillance conçu pour détecter un taux d'erreur (BER), le nombre des erreurs de symbole corrigées d'un codage de protection contre les erreurs, un facteur Q et/ou d'un diagramme en oeil.

18. Système de transmission optique selon l'une des trois revendications précédentes, **caractérisé par** un module de surveillance conçu pour détecter la dispersion accumulée.

19. Système de transmission optique selon l'une des quatre revendications précédentes, **caractérisé par** un module de surveillance conçu pour détecter le degré de polarisation ou le spectre de la densité de puissance.

Fig. 1

Fig. 2

Fig. 3

EP 1 738 503 B1

Fig. 4

EP 1 738 503 B1

14

Fig. 5

**EP 1 738 503 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03084100 A